# EUROPEAN PATENT APPLICATION

(11) **EP 2 146 150 A2**
(43) Date of publication of application: **20.01.2010**
(21) Application number: 09165798.1
(22) Date of filing: 17.07.2009
(51) Int. Cl.: F24F 5/00

(54) **Method for controlling the climate in a building, and respective building**

(30) Priority: 17.07.2008 NL 2001816
(71) Applicant: Karthaus, Emiel, 2514 GP Den Haag (NL)
(72) Inventor: Karthaus, Emiel Willem, 2514 GP, Den Haag (NL); Burggraaf, Johanna Elizabeth, 2562 CJ, Den Haag (NL); de Gier, Martinus Hubertus Wilhelmus, 3039 LJ, Rotterdam (NL)
(74) Representative: Ketelaars, Maarten F.J.M.

(57) **Abstract**

Method for controlling the climate in a building (1) that has an outer shell (17), has an exterior walls (2) and/or a roof (3), said shell (17) having a heat capacity *Wg*, comprising the steps of:
- providing a facility (9) exterior in relation to said shell (17) with a heat capacity *Wm*,
- the provision of a heat-exchange system (11, 12, 19, 20, 21, 24, 28) in connection with the shell (17) and the facility (9),
- the transfer of heat from the shell to the provision at a temperature of the shell (17) higher than the temperature of the facility (9).
- the transfer of heat from the facility to the shell at a temperature of the shell (17) lower than the temperature of the facility (9).

## Description

The invention relates to the control of the climate in buildings. In particular, the object is to provide a healthy indoor climate, which specifically depends on the interaction of heat, air and moisture between the interior and the exterior of the building in the most natural manner possible. This as opposed to the interaction achieved through heating and ventilation installations, of which air-conditioning installations are prime examples. An additional object is to keep the construction and energy costs associated with heating and cooling the building as low as possible.

According to the traditional approach, it is known that heat can be extracted from the ambient environment, for example by means of solar collectors, solar heated boilers and heat pumps and for that heat to be transferred to the interior of the building. The heat is provided by heat-exchangers such as radiators or convectors, which are arranged on the interior of the building. Heat can be also collected by direct incident solar radiation into a building, as is the case in horticultural greenhouses. This heat can also be stored in a medium with a specific heat capacity through heat-exchangers. Conversely, heat can also be extracted from the interior of a building using heat-exchangers and, for example, be fed to the outside air or to a subterranean storage means, such as an aquifer and the like.

The outer casing or shell of the building that surrounds the inside, always acts as a strong insulating element that should ensure that the least possible heat exchange occurs between the interior and the exterior of the building. Indeed, when heating the interior, a maximum efficiency of the heat exchange system is only achieved if the least possible heat escapes to the exterior, and conversely, this also applies to cooling.

All of these approaches are based upon the high insulating properties of the shell of the building. However, the one-sided emphasis on the high insulating properties of the shell also has drawbacks which have an adverse effect on other properties of the shell. The shell is also important for regulating ventilation and controlling the moisture content in the building. The air in the interior of a building has a certain temperature and certain moisture content. Depending on the difference in the temperature and moisture content in the environment outside of the building, certain phenomena occur that may be favorable or unfavorable to the climate in the building, as well as to its structure.

In this respect, the structure of the building, and particularly the construction of the shell itself, plays an important role. Examples that can be given include so-called monumental buildings which generally have solid walls. Such solid walls often form a strong cold sink. In the past, heat escaping through the walls was widely accepted. As a result of this, the temperature of the wall decreases from the inside to the outside and, under certain conditions, this may lead to condensation on and in the structure of the shell. This is especially the case if the dew point of the air on the interior of the building does not lie on the exterior of the walls. Such condensation is highly undesirable as mould may occur, which has an adverse effect on the interior climate and may damage the material of the walls over time. Because the interior was heated less in the past and because much more heat transfer was accepted, there was often no long-term condensation on the interior of the structure.

Recently, however, the focus has been on energy conservation whilst continual attempts have been made to increase the insulating properties of the shell as much as possible. In this traditional approach therefore, attempts are made to insulate such walls. Although it would be preferable, from an architectural point of view, to insulate the outside of the walls, this is not desirable for aesthetic reasons. This is why attempts are made to insulate the interior of the structured shell. The drawback of such an approach is that, as a result of this higher insulation, the dew point will be on the interior of the structure and result in moulding and other associated drawbacks with regard to health and to the well-being of the structure itself.

From the perspective of a healthy living environment, it would therefore be preferable to allow heat to 'escape' from such solid walls so that the dew point will be on the exterior of the shell. At the present time, however, this is a less appropriate approach, given the high costs associated with heating and the environmental aspects involved.

Attempts are being made to overcome these problems by constructing a more or less a new moisture resistant structure or box structure within the original, often solid shell. Such a new moisture resistant box can then be heated and ventilated separately, by means of an additional technology. The disadvantage of this is that the original historic structure of the shell remains permanently concealed from view on the interior, which diminishes the aesthetic value of the building. In addition, the additional technology requires careful implementation, fine-tuning, adaptation to specific use and regular maintenance. In conclusion therefore, it may be said that the requirements for transmission and insulation of the constructed shell are often contradictory to the design.

However, these conflicting requirements not occur in the case of older buildings. The previously described problems regarding conflicting requirements between energy and efficiency on the one side, and a healthy indoor climate on the other, may also occur in newly constructed buildings. Although recent building regulations apply certain standards with regard to ventilation and air conditioning, the problems that occur in relation to the insulation required in order to save on energy also occur in newly constructed buildings with regard to the indoor climate.

Therefore, the object of the invention is to control the climate in a building in such a manner that, on the one hand, a healthy environment in the interior thereof can be achieved, and, on the other hand, to enable an efficient and economically justifiable means of cooling and heating. This object is achieved by applying a method to control the climate in a building which has an outer shell consisting of outer walls and/or a roof, said shell having a heat capacity *Wg*, comprising the steps of:
- the provision of a shell, at least a section of which, such as an outer wall, is only solid and/or monolithic,
- providing an external facility relative to the shell, with a heat capacity *Wm*
- the provision of a heat-exchange system directly connected to the shell and said facility,
- the transfer of heat from the shell to the provision at a temperature of the shell higher than the temperature of the facility,
- the transfer of heat from the facility to the shell at a temperature of the shell lower than the temperature of the facility.

According to the invention, the mass of the shell is coupled with a facility such as a mass or substance, in such a manner that the combined heat capacity of the shell and such other facility is greater than the heat capacity of the shell itself. Here, heat capacity is given to mean the quantity of heat energy that is required in order to increase the temperature of an object by one degree Celsius. The shell, i.e. the walls and/or the roof of a building, for example, may rise in temperature as a result of an increase in air temperature or incident solar radiation. As a consequence of this, the temperature on the interior of the building also increases. However, due to the heat exchange between the building and the facility, such as a subterranean mass (defined in the subsurface), the temperature of the building rises less rapidly because the heat energy absorbed by the building as a result of the higher air temperature or the incident solar radiation is partially transferred to the facility by the heat-exchange system.

The advantage of this is that less energy is required to cool the building, if there is a need to cool at all. In addition, heat energy is stored in the subsurface, which can be used later during the cold season. Consequently, less heating is required during the cold season, which also results in a saving on energy costs. Furthermore, the shell can allow heat to escape to the relatively cold environment whilst avoiding excessive net energy costs. The result is that the dew point will be on the outside of the structure of the building so that there will be no mould or other adverse effects caused by dew and condensation.

It can therefore be concluded that the shell itself acts as a heat exchanger, both in cooling the building during the warm season and in that it heats the building during the cold season. Both the mass of the shell and the provision, such as a mass of a subsurface, play an important role in the heat balance of the shell, and does this throughout the year, not only as variations occur during day and night, but also between the side exposed to sunlight and dark side of the building.

In itself it is known, as was previously mentioned, for example, to collect heat with the use of solar heat collectors and to store that heat in the subsurface. According to the invention, the shell itself, i.e. the wooden or stone-like walls and roof of the building, is used to collect the heat. This as opposed to the customary methods applied, whereby the objective of the shell, for example, is only to retain the heat collected by solar collectors or fossil fuel energy within the shell.

An advantage of the method according to the invention is that this can be applied not only to new buildings but also to older buildings. By installing heat-exchangers in an appropriate manner in the often solid walls of older buildings, the shell can act as a heat-exchanger so that the dew-point is or will be on the exterior of the structure of the shell during cold periods. The original properties of the shell are thus retained in the older building, and it is no longer necessary to construct additional walls on the inside or the outside of the shell.

The following advantages can be achieved by applying the method according to the invention:
- optimization of the properties that are essential in order to obtain a healthy indoor climate,
- preservation of the entire quality of the shell with regard to all properties that relate to the technical aspects such as construction, incidence of solar radiation, noise abatement, rain and the like,
- preservation of the architectural or aesthetic features of the shell comprising walls and roof, both on the interior and the exterior.
- optimization of the control of heat, moist air between the exterior and interior of the walls and roof,
- saving on energy costs.

To obtain a healthy indoor climate, in which the inflow and outflow of moisture and air through the shell is of paramount importance, it is useful if the shell has a relatively high temperature and is, in any case, higher than in a heat-insulated shell. The level of this temperature would need to lie between the minimum and maximum outdoor temperature reached during the given season. The relatively high temperature of the shell enables a relatively high transfer of moisture relative to the amount of air in comparison with a thermally insulated shell, which would need to be made moisture resistant. This would render mechanical devices for controlling the humidity to a large extent superfluous.

At a relatively high outside temperature, the temperature of the shell, which lies between the highest and the lowest outdoor temperature, is usually relatively low. This low temperature of the shell relative to the ambient temperature enables the absorption of heat from both the interior and the exterior of the shell and for that heat to be transferred to a subsurface (defined in the subsurface). Conversely, the temperature of the shell is relatively high in relation to the ambient temperature during cold periods, thus enabling the interior of the building, enclosed by the shell, to be heated. Subsequently, a lot less supplementary heating is required in the form of internal radiators and the like. Due to the relatively high temperature of the shell relative to the ambient temperature, the shell can transfer heat to both the exterior and the interior. In this manner, the temperature of the subsurface provision, for example, which exchanges heat with the shell, may drop, so that a cooling capacity can be accumulated for the warm season.

The temperature of the building or the shell basically follows the variations in the interior and exterior temperature for prolonged periods of time with only minor fluctuations. The temperature of use in the interior of the building can be obtained by adding heat as required, or by extracting heat from the interior of the building. Large fluctuations then occur in the time and temperature. Anyhow, the use of a shell with a relatively high temperature at least ensures that less heat or cold needs to be added in order to obtain a comfortable and efficient temperature during all seasons.

A further advantage of the method according to the invention is that a simple and economic engineering technique can be applied, wherein thermal bridges could be accepted without condensation occuring therein. A further advantage is that no equipment or less powerful equipment would be required for cooling or heating the interior of the building. As a result, the costs of investing in these installations and energy costs could be kept to a minimum.

Unlike the known buildings with heat-exchange systems, heat is absorbed in the warm season in the mass of the shell, and transferred to a heat-exchange medium such as water, connected to an external storage means such as a subsurface facility. It is not necessary to provide transparent parts such as translucent panels in order to collect heat, which is the case in greenhouses, for example. This means that the normal appearance of the building can be retained, which is of particular importance in older or monumental buildings. Further to this, it should be noted that it is not necessary for the entire surface of the shell to serve as a heat-exchanger, i.e. the entire surface of all walls and the entire roof. This means that it is sufficient only for specific areas of the wall surfaces to serve as a heat-exchanger, for example, the sides of openings exposed to sunlight in the walls, where windows, doors, etc. are fitted.

As previously mentioned, the facility applied in the heat-exchange in relation to the building can be arranged in the form of a defined section of a base or subsurface. Other provisions are also conceivable, such as an external provision, for example, in the form of a liquid mass, such as a reservoir filled with water.

As previously mentioned, it may be necessary in cold periods to apply supplementary heating, which can be achieved by providing a heat-exchange system with heat-exchangers incorporated within the shell, such as traditional radiators mounted at a distance from the shell.

The invention further relates to the combination of a building having an outer shell comprising outer walls and/or a roof, said shell, or at least a section thereof, comprising an outer wall that is only solid or monolithic and which shell has a heat capacity *Wg*, an external facility in relation to said shell with a heat capacity *Wm* which is greater than the heat capacity *Wg*, as well as a heat-exchange system connected to the shell and said facility, wherein the heat-exchange system is provided with at least one heat-exchanger directly connected to the shell. In particular, a heat-exchanger is incorporated in a wall and/or in the roof. As previously mentioned, a heat-exchanger can be further incorporated in or on a wall section that surrounds an opening of a window and the like.

The invention further relates to a building for use in the aforementioned combination. This building is provided with an outer shell constructed from outer walls and/or a roof, a special feature thereof being that at least a portion, such as a wall, is solid and/or monolithic and that there is a heat exchange system that has a direct heat-exchanging relation with the shell. The heat-exchange system relates to a direct heat-exchanging relation with at least one heat-exchanging portion of the outer wall or roof. In particular, the heat exchange section is not necessarily transparent, for example, but could be a heat-exchange section in the form of a solid structure such as a stone, metal or wooden construction.

The heat-exchange system therefore comprises at least one heat-exchanger arranged within the shell. This position of the heat-exchanger can be varied. According to an alternative embodiment, the heat-exchanger within the shell can comprise a heat-exchanger that borders on or is close to the outer surface of such shell. This heat-exchanger can be activated or function as a stand-by if the outside temperature or incident solar radiation enables the absorption of heat on the outer surface of the shell. However, this heat-exchanger is switched off if heat loss on the outer side occurs.

In that respect, according to a further embodiment, a heat-exchanger within the shell can border on or be located close to the inner surface of the shell. This heat-exchanger is activated in order to supply heat to the shell from the subsurface heat provision and the like. The position of this heat-exchanger on the inner side of the shell results in less heat loss on the outer side due to the relative insulating properties of the shell.

In this respect, reference is made to the prior art, as is known from US patent application 2007/0.056.304. Disclosed therein is a known building that exchanges heat with a section of a subsurfacesoil. The roof of the building acts as a heat-exchanger, where heat from incident solar radiation is absorbed by air flowing freely through channels in the roof. This air is discharged into the environment, generating a draught which, in turn, generates a pressure difference so that the air is drawn by suction through a subsurface heat-exchanger. As a result, in the warm season cooling occurs in the form of cool air from the subsurface heat-exchanger. The cool air is distributed through channels in the floor and walls of the building. Further to this, this known building has a solar collector through which air from the interior of the building is fed in order to be heated and then fed back into the building again.

Although the shell in this known building exchanges heat with a mass in the subsurface in connection with the cooling of the building, it is not known that it serves to feed heat extracted from the subsurface soil to the shell. The subsurface soil is only used to feed cool air during warm periods to the shell. The disadvantage of this is that costly investments in solar collectors are still required in connection with heating, and that two separate heat-exchange circuits exist, each of which is individually controlled by the proper operation of valves.

In the previous description of the invention, a wall or roof with a solid or monolithic construction is described. This includes a wall between the outer surface and the inner surface defining the inner space used in the building, which is completely solid or monolithic. In other words, such a solid or monolithic wall has no opening in between, such as a cavity. This therefore refers to a single solid wall that is different to a cavity wall with two wall leaves with the cavity in between. Such solid or monolithic designs have no other insulating value other than the insulating material itself from which the wall or roof is constructed, such as stone and wood and such, and has no other sections or layers with a specific deviating or higher insulating value. Furthermore, in the above, there are walls or roofs with at least a partial or completely solid or monolithic structure. Of course, it is also possible to construct a wall or a roof which is completely solid or monolithic.

The invention will now be described in further detail with reference to several exemplary embodiments shown in the figures.
Figure 1 shows a cross section through a first embodiment of a first combination of a building with a subsurface according to the invention.
Figure 2 shows a second embodiment.
Figure 3 shows a detail of a heat-exchanger in the outer reveal of an outer wall.
Figure 4 shows a cross section through a roof with heat-exchanger.
Figure 5 shows a view in perspective of the heat exchanger in the roof of Figure 4.
Figures 6 and 7 show alternative embodiments of a solid wall with heat-exchanger.

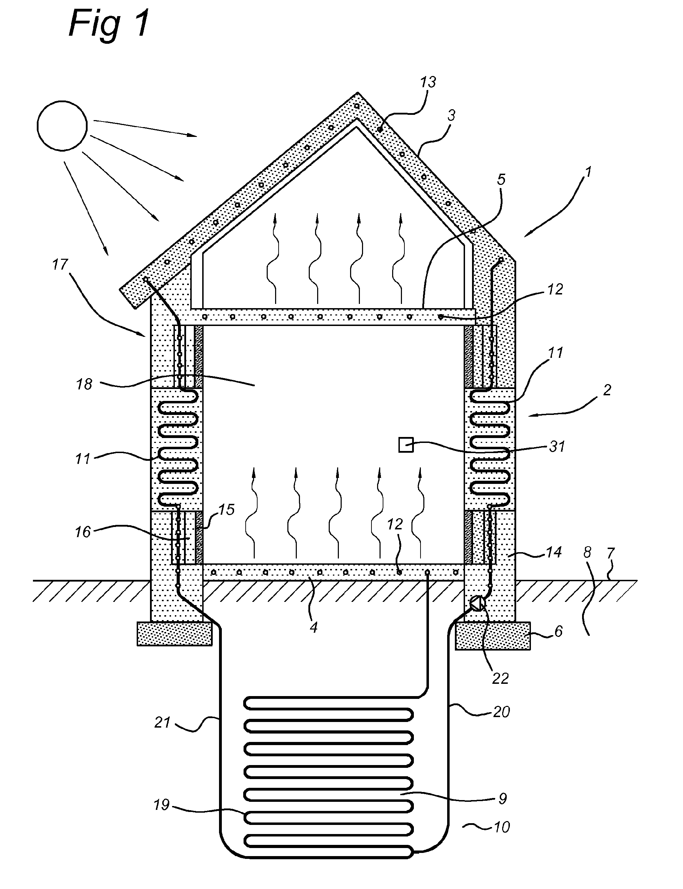

Figure 1 shows a building 1 consisting of walls 2, a roof 3, floors 4, 5 and a foundation 6. The foundation is laid in the subsurface 8, the surface of which is indicated by the reference numeral 7. In the subsurface is a region 10 that is provided with heat-exchanger 9. The walls 2 incorporate heat-exchangers 11, as do the floors 4, 5 where the heat-exchangers 12 are located. Finally, the roof 3 has the heat-exchangers 13 provided therein.

In the embodiment of figure 1, the walls comprise an outer wall 14 and an inner wall 15, with the cavity 16 in between. This therefore relates, for example, to a relatively modern building or new buildings. The walls 2 and the roof 3 both form the so-called shell 17 of the building 1, i.e. the outer shell thereof which separates the interior 18 of the building 1 and the outer environment. This shell has a heat capacity *Wg*. The region 10 in the subsurface 8 has a heat capacity *Wm*.

The heat-exchanger 9 in the region 10 of the substrate 8 consists in a known manner of a large number of pipes 19, which are connected to the heat-exchanger 11-13 via a supply pipe 20. A pump 22 is arranged in the supply pipe which can pump a fluid, such as water, through the various heat-exchangers. The fluid from the heat-exchanger 9 is pumped to the heat-exchangers 11-13 in the building via discharge pipe 21.

In use, the combination of the building 1 and the subsurface facility 10, which are both connected to each other by the heat-exchanger system, is operated as follows. In warm periods, the shell of the building absorbs heat from the ambient air. In addition, solar rays fall on the building 1 which then heat the walls 2 and the roof 13 which are inclined towards the sun. Since the heat exchangers 11 are directly connected to the walls 2 and the heat exchangers 13 are directly connected to the roof 3, the fluid flowing through heat exchangers 11, 13 will increase in temperature. The fluid thus heated enters the heat exchanger 9 via feed line 20, which then transfers the heat to the relatively cool region 10 in the subsurface 8. This region may consist of an aquifer or other heat capacity. The fluid thus cooled flows through the feed line 21 back to the heat-exchangers 11 and 13. This cools the mass from walls 2 and roof construction 3, while heat is simultaneously stored in the subsurface provision 8.

It is also possible to extract heat in this manner from the interior 18 of the building 1 through the heat exchangers 12 in the floors 4 and 5.

The temperature increase of the shell 17 will therefore be lower than the temperature rise of the walls and roof of a traditional building, which are not connected with heat-exchangers. In such a traditionally constructed building, a relatively highly insulated shell would therefore need to be applied in order to prevent the inside temperature from rising too quickly. In the combination according to the invention, such a high insulation is not necessary because the shell is cooled and in this way will prevent the temperature on the interior 18 from rising too rapidly.

Conversely, the interior 18 will need to be heated during the cold season. This can be achieved by the fluid which supplies heat from the region 10 in the subsurface 8 to the shell 17. In this case, relatively warm fluid flows to the heat-exchangers 11 and 13 in the walls 2 and the roof construction 3. This heat is transferred to the interior 18 of the building 1. However, part of this heat may also escape from the walls 2 and the roof construction 3 into the outside environment. The advantage of this is that the dew point of air in the interior 18 of the building will then be on the outside of the structure, thus preventing condensation and the formation of mould in the building associated therewith.

Supplementary to the heat originating from the heat-exchanger 11, 13 and in the walls 2 and the roof structure 3, the heating of the interior 18 may also be achieved by means of the heat exchangers 12 in the floors 4 and 5.

The result of this approach is that only a much smaller temperature difference needs to be bridged, thus requiring less energy in order to achieve a comfortable temperature for the user. A second advantage is that this effective temperature can be achieved very quickly, but also be just as easily abandoned.

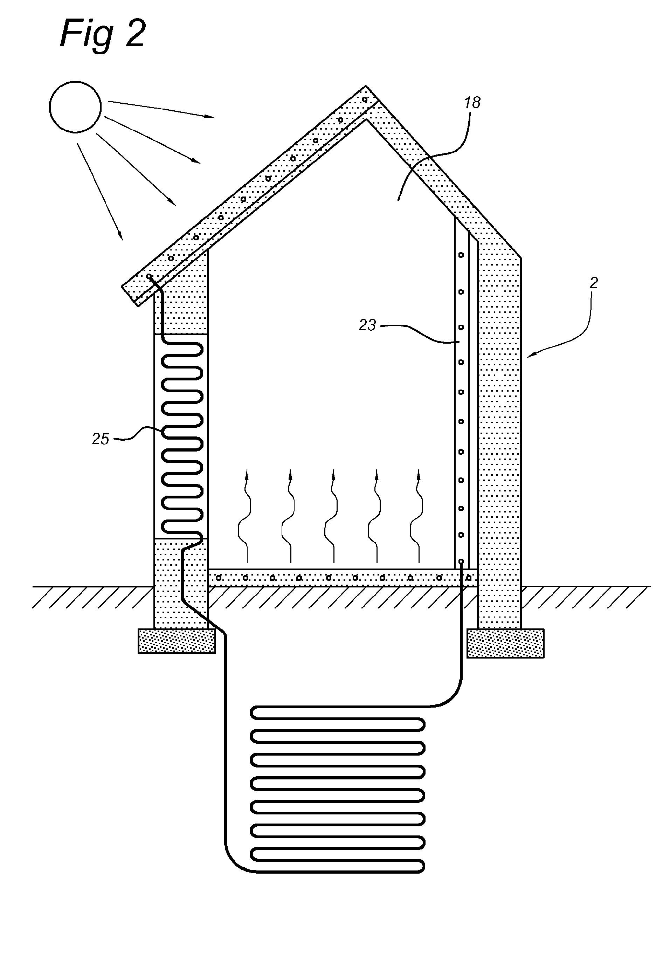

The embodiment of figure 2 substantially corresponds to the combination shown in figure 1, but without any heat-exchanger being incorporated on the interior of the structure of the shell, but on the inside of the shell instead. This approach is possible in existing structures, and also in cases in which solid walls are often applied. In this case, the heat capacity in the subsurface *Wm* 8 will receive less heat supplied from the outer side of the shell, but more heat from the inner side when this is brought up to an effective temperature in the cold season by supplementary heating. Conversely, the heat capacity *Wm* loses less heat on the outside of the shell due to the relatively higher insulating effect of the existing wall structure.
In relation to the cold ambient temperature in the winter, the relatively warm heat-exchanger 23 will then be able to prevent the temperature in the structure of the skin from dropping below the dew point.

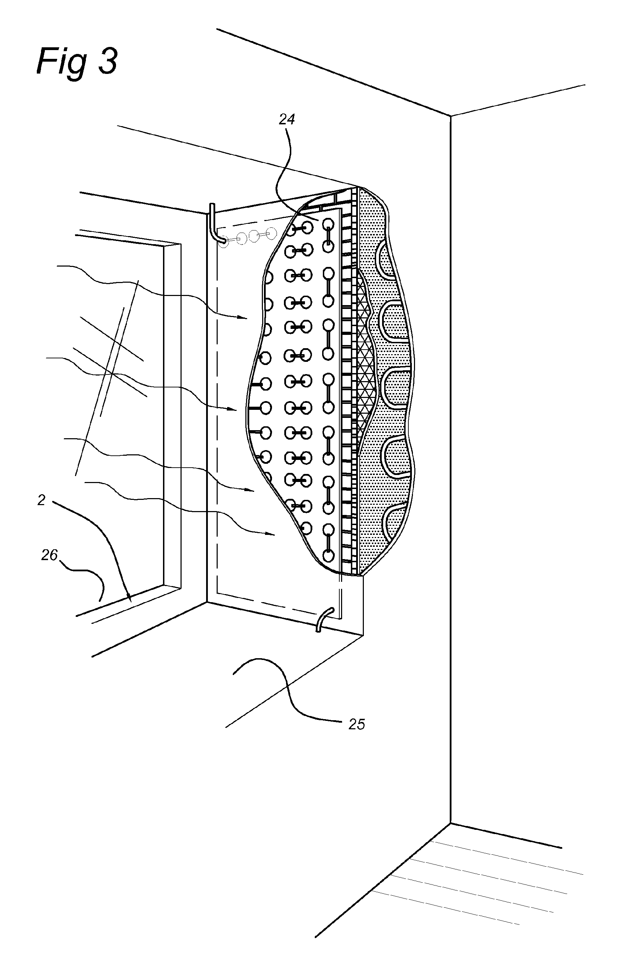

While the previous refers to heat-exchangers incorporated within the walls and the roof construction, it is also possible to incorporate a heat-exchanger 24 in the outer reveal 25 of a wall 2, as is shown in the embodiment of figure 3. This heat-exchanger 24 is located just within the window 26 so that the rays of the sun can fall on the heat exchanger 24. Such a heat-exchanger forms part of the heat-exchange system as shown in Figures 1 and 2.

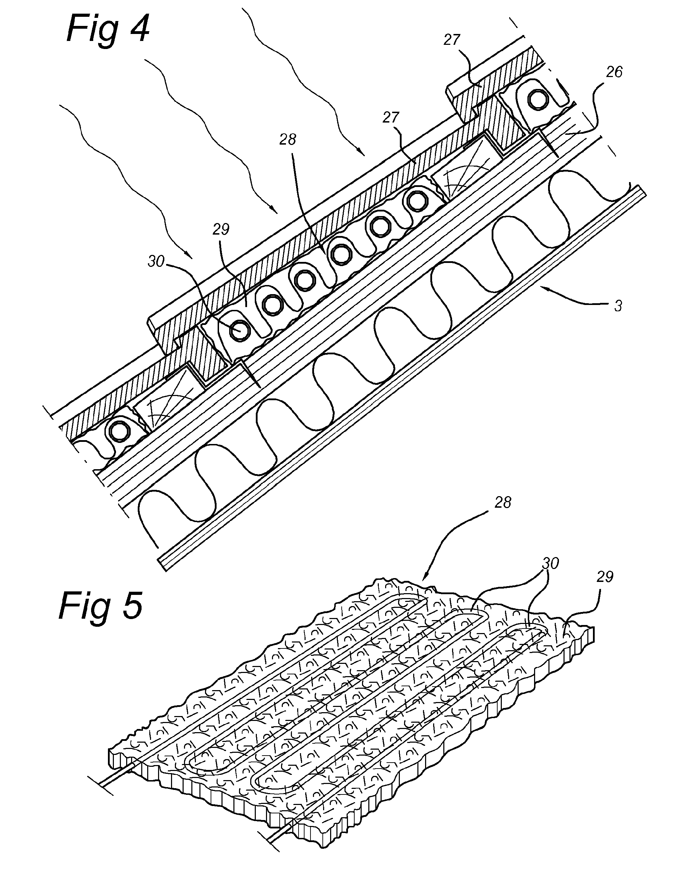

Figure 4 shows as an example a section of the roof structure 3, with tile lathes on which roof tiles 27 are laid. A mat 28 comprising metal wool 29 is laid underneath all roof tiles (see also figure 5), for example, in which heat-exchanger tubes 30 are laid. It is also conceivable that these heat-exchange tubes are embedded in heat-conductive mortar. Such a heat-exchanger can be laid underneath multiple roof tiles and thus form part of the previously described heat-exchange system.

In order to maintain a proper moisture balance and ventilation in the building, it will suffice to form a sufficiently large surface area of the shell of the building to allow the free flow of moisture and air. The transmission of outside air to the interior as a result of natural variations in pressure enables this air to be heated by the shell and, conversely, for the air discharged from the interior to the exterior to largely transfer its heat by means of heat-exchangers 11 and 13 to the heat capacity 10 *Wm.* The advantage is that this method makes any additional equipment for heat recovery from ventilated air unnecessary.

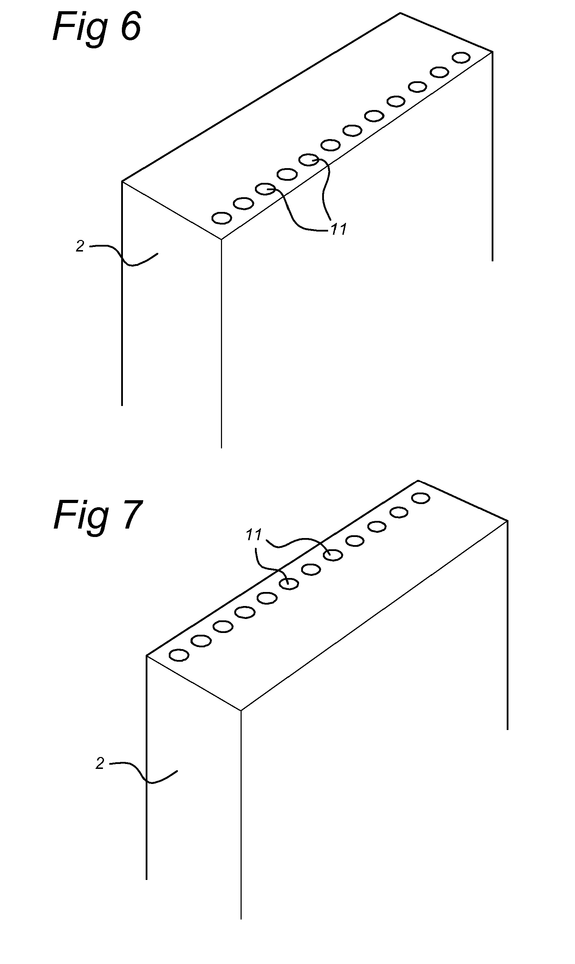

Figure 6 shows a solid wall 2 with a heat-exchanger 11 bordering on the inner side of the wall. In figure 7, the heat-exchanger is located on the outer side of the solid wall. In both cases, there is no insulating layer between the heat-exchanger and the inner side and/or outer side of the wall 2. In the most simple embodiment of the wall 2, there is no insulating layer in the wall 2 at all.

## Claims

1. Method for controlling the climate in a building (1) that has an outer shell (17), exterior walls (2) and/or a roof (3), said shell (17) having a heat capacity *Wg*, comprising the steps of:
- the provision of a shell (17), at least a part of which, such as an outer wall (2), is only solid and/or monolithic,
- providing a facility exterior in relation to said shell (17) with a heat capacity *Wm*,
- the provision of a heat-exchange system (11, 12, 19, 20, 21, 24, 28) connected to the shell (17), such as in connection with the solid or monolithic section of the shell, and the facility (9),
- the transfer of heat from the shell to the facility at a temperature of the shell (17) higher than the temperature of the facility (9).
- the transfer of heat from the facility to the shell at a temperature of the shell (17) lower than the temperature of the facility (9).

2. Method according to claim 1, comprising the step of:
- providing an external facility in the form of a defined section (9) of a base or subsurface (8), or in the form of a liquid mass such as a reservoir filled with water.

3. Method according to any of the preceding claims, comprising the step of:
- the provision of a heat-exchange system with heat-exchangers (31) incorporated within the shell (17), such as traditional radiators mounted at a distance from the shell (17).

4. Method according to any of the preceding claims, comprising the steps of:
- the provision of a shell (17) with a specific permeability in relation to moisture and/or air.
- the generation of a pressure difference between the interior of the shell (17) and the exterior of said shell, enabling air to pass through said shell,
- the creation of a heat-transfer between the air passing through the shell (17) and said shell,
- the provision of a heat-exchange via a heat-exchange system (11, 12, 19, 20, 21, 24, 28) between the shell (17) and the facility (9).

5. Combination of a building (1) that has an outer shell (17) comprising outer walls (2) and/or a roof (3), said shell, or at least a section thereof, comprising an outer wall (2) that is only solid or monolithic and which shell has a heat capacity *Wg*, a facility (9) external in relation to said shell (17) with a heat capacity *Wm* which is greater than the heat capacity *Wg*, as well as a heat-exchange system connected to the shell and said facility, and a heat-exchange system (11, 12, 19, 20, 21, 24, 28) such as directly connected to the solid or monolithic section of said shell, and the facility (9), wherein the heat-exchange system is provided with at least one heat-exchanger (11, 12, 28, 24) in direct relationship with the shell (17).

6. Combination according to claim 5, wherein at least one heat-exchanger (11, 12) is incorporated in a wall (2) and/or in the roof (3), such as a solid or monolithic section of a roof and/or wall.

7. Combination according to claim 5 or 6, wherein at least one heat-exchanger (24) is incorporated in or on a wall section (25) that surrounds an opening of a window (2) and the like.

8. Combination according to any of the claims 5-7, wherein the heat-exchange system comprises at least a pump (22) for pumping the heat-transfer fluid.

9. Combination according to any of the claims 5-7, wherein the heat-exchange system comprises at least one heat-exchanger (31) incorporated within the shell (17).

10. Building (1) for use in conjunction with any of the claims 7-11, provided with an outer shell (17) comprising outer walls (2) and/or a roof (3), **characterized in that** at least a section of said shell, such as an outer wall (2), is only solid and/or monolithic and that a heat-exchange system (11, 12, 19, 20, 21, 24, 28) is provided in direct relationship to the shell (17), such as directly connected to the solid or monolithic section of said shell.

11. Building (1) according to claim 10, wherein the heat-exchange system is in direct heat-exchange relationship with at least one heat-exchanging section of an outer wall or roof.

12. Building according to claim 11, wherein the heat-exchanging section comprises only a solid or monolithic structure, such as a stone, metal or wooden structure.

13. Building according to claims 10-12, wherein the shell is permeable and/or comprises a sufficiently large area allowing the free flow of moisture and air so as to enable a comfortable and healthy indoor climate to be maintained, possibly without the use of mechanical means.

14. Building according to any of the claims 10-13, wherein the heat-exchange system (11, 12, 19, 20, 21, 24, 28) comprises at least one heat-exchanger incorporated within said shell, bordering on or arranged close to the outer surface of said shell.

15. Building according to any of the claims 10-14, wherein the heat-exchange system (11, 12, 19, 20, 21, 24, 28) comprises at least one heat-exchanger in the shell bordering on or arranged close to the inner surface of the shell.
